# EUROPEAN PATENT SPECIFICATION

(11) **EP 1 033 072 B1**
(45) Date of publication and mention of the grant of the patent: **28.07.2004**
(21) Application number: 00301230.9
(22) Date of filing: 17.02.2000
(51) Int. Cl.: A01F 15/07, A01D 87/12

(54) **Bale Handling device for bale wrapper apparatus**
Ladevorrichtung für Ballenwickler
Dispsitif de collecte pour appareil d'emballage de balles de fourrage

(30) Priority: 19.02.1999 GB 9903741
(43) Date of publication of application: 06.09.2000
(73) Proprietor: Kverneland Naerbo AS, 4350 Naerbo (NO)
(72) Inventor: Royneberg, Erling, 4350 Naerbo (NO)
(74) Representative: Orr, William McLean

(56) References cited:
- EP-A- 0 336 739
- WO-A-95/34196
- WO-A-99/04612
- GB-A- 2 159 489
- US-A- 5 224 323

## Description

This invention relates to a bale wrapper apparatus for use in agriculture according to the preamble of claim 1, and which is intended to pick-up a bale lying on the ground, and to apply stretch film wrapping to the bale, prior to discharge of the wrapped bale.

It is well known to apply stretch film wrapping to bales of e.g. grass and straw, and such bales are usually cylindrical (so-called round bales), or are of rectangular cross section. In the case of partly dried grass, the wrapping encloses the bale in substantially air and water tight manner, so that fermentation of the grass can take place to form silage.

Bale wrappers can be of the rotating turntable type, in which a pair of spaced rollers (plus slack belts if necessary) can rotate the bale about its axis (generally horizontal) simultaneously with rotation of the turntable about a substantially vertical axis. During such rotation, film is withdrawn from a fixed dispenser reel so as to complete the wrapping of the bale.

An alternative type of bale wrapper has a table with a pair of spaced rollers (plus slack belts if required) which rotate the bale about its axis, and an orbiting satellite type of film dispenser reel is caused to rotate about a substantially vertical axis so that film can again be withdrawn in order to complete the wrapping of the bale.

Rotating turntable, and orbiting satellite type bale wrappers will be well known to those of ordinary skill in the art, and need not be described in more detail herein.

The present invention is applicable to both types of bale wrapper apparatus, and which can be coupled with a tractor or other propelling vehicle e.g. a tractor propelled baler, and the apparatus has a forwardly mounted bale handler device which is operative to pick-up a bale lying on the ground in its path of travel, and to transfer the bale rearwardly onto a bale wrapping table of the apparatus.

In the formation of cylindrical bales, it is usual for a baler of the fixed or variable chamber type to follow a substantially straight path in order to pick-up a mown crop lying on the ground, and to discharge the bale rearwardly of the baler and onto the ground. The bale deposited on the ground usually has its axis extending substantially perpendicular to the direction of forward travel of the baler. Therefore, the bales are deposited in rows, in which the axes of the bales in each row extend generally perpendicular to the direction of the row.

It is known to provide trailed bale wrappers which have a side-mounted bale lifting cradle, so that the bale wrapper can be moved to a position along one side of a bale lying on the ground, for subsequent engagement by the cradle. The cradle therefore engages the bale, holds it and then lifts the bale so that it can fall under gravity onto the table.

A side mounted cradle usually takes the form of a U-shaped device having a pair of parallel lift arms which slide under the bale in order to engage, hold and then lift the bale, but this requires the cradle to be presented to the bale with the lift arms extending generally parallel to the axis of the bale.

Given that the bales in a row have their axes perpendicular to the row, it is necessary for the wrapper apparatus to be steered from one bale to another so as to bring the cradle arms into alignment with the axis of each bale i.e. the wrapper apparatus cannot simply move lengthwise of each row, since the axes of the bales in each row extend perpendicular to the direction of the row.

It is also known, for example from US-A-5 224 323 to provide a front mounted lifting cradle on a bale wrapper, and which has a pair of parallel lift arms which can engage opposed end faces of a cylindrical bale (with the bale axis perpendicular to the arms), grip the bale, and then lift the bale onto the table. However, while the baler usually deposits the bales on the ground with their axes perpendicular to the direction of travel, in practice after discharge of the bales from the baler, the bales often end up with their axes substantially non-perpendicular to the row, and which makes it difficult for the lift arms of a front mounted lifting cradle to make reliable gripping engagement with the bale.

Also, in the subsequent rearward transfer of the bale onto the table (which usually comprises a pair of spaced rollers plus slack belts if required with the rollers being arranged with their axes perpendicular to the lift arms), it is important to ensure as far as possible that the bales are always located onto the rollers symmetrically i.e. with the bale ends located equidistant from the adjacent roller ends.

This is important to ensure that reliable and uniform wrapping of the stretch film can take place, since if a bale is deposited off-centre of the rollers, one bale end may project outwardly of the adjacent roller end, and which can result in uneven wrapping (either in the case of a rotating turntable and fixed reel; or an orbiting satellite film dispenser reel type of apparatus).

The invention has therefore been developed primarily with a view to provide an improved design of lifting cradle which is front mounted on the frame of the wrapping table of a bale wrapper apparatus, and which is better able to manipulate misaligned bales lying on the ground, and to achieve substantially uniform delivery of the bales to the rollers of the table so as to achieve more reliable bale wrapping.

This object is achieved by the present invention according to claim 1. Further advantageous arrangements of the invention appear from the dependent claims.

According to the invention there is provided a bale wrapper apparatus which comprises:
a frame;
mounting means provided on the frame for coupling the apparatus with a propelling vehicle;
a wrapping table mounted on the frame and having rollers which are operative to rotate the bale about its axis;
holding means for holding a film dispenser reel;
means for applying relative rotation between the holding means and the table about an upright axis substantially perpendicular to the axes of the rollers so that film wrapping can be applied to the bale; and,
a bale-handling device mounted on the frame forwardly of the table and operative to engage and to grip a bale lying on the ground, and to transfer the bale to the table:
characterised in that the bale-handling device comprises:
first and second lift arms spaced apart laterally from each other to define a receiving space for a bale lying on the ground;
means permitting relative movement between the first and second lift arms so that the latter can engage opposed end regions of the bale to grip the bale and then being operative to transfer the bale rearwardly to the wrapping table; and,
a moveable guide surface, which defines part of said receiving space, and which is engageable by the bale as the latter becomes engaged by the lift arms, said guide surface being operative to guide adjustment movement of the bale relative to the receiving space, when necessary, in order to locate the bale in a predetermined position axially relative to the centre of the table.

The first and second lift arms, and the moveable guide surface, therefore co-operate to engage a bale lying on the ground, and during the gripping of the bale by the lift arms, the bale can be manipulated so as to take-up a desired position axially relative to the rollers of the table, prior to rearward transfer of the bale to the table. By this arrangement, it is possible to ensure that the bales can be deposited on the table at controlled positions axially of the rollers, so as to allow reliable and uniform bale wrapping to take place each time.

Therefore, in the event of any misalignment between the receiving space and a bale lying on the ground e.g. a cylindrical bale having its axis not strictly perpendicular to the direction of advance of the bale handling device, the lift arms engage the bale which, in co-operation with the guide surface, causes the bale to adjust its position relative to the receiving space, before transfer to the table takes place.

The guide surface may take a number of different forms, provided that it allows any necessary adjusting movement of the bale. Thus, the guide surface may comprise a movable conveyor arrangement, such as an endless conveyor surface, or a series of spaced conveyor rollers.

However, one particularly preferred conveyor arrangement comprises the provision of a linearly reciprocatable platform. Preferably, the platform is biassed to an initial bale-engaging position, and is movable against the biassing as the bale adjusts its position. Thereafter, upon transfer of the bale to the table, the platform then returns to its initial position.

A bale wrapper apparatus according to the invention is particularly suitable for use in picking-up, and wrapping, cylindrical bales lying on the ground, though it should be understood that the invention may be used also with rectangular cross section bales.

The gripping engagement of the lift arms with the bale is preferably part engagement with opposed end faces of the bale, and part engagement with the underside of the bale to assist subsequent lifting and rearward transfer to the table. The lift arms may therefore be shaped accordingly, so as to perform these two different forms of engagement with the bale.

In a preferred arrangement, the first lift arm is fixed, and the second lift arm is pivotally mounted. The arms therefore may form a generally U-shaped cradle, and at least part of the U-shaped receiving space may be formed by the guide surface which extends at least partly between the inboard ends of the lift arms.

A fluid pressure operated system may be provided to operate the lift arms i.e. bale-engagement, gripping, and lifting and rearward transfer to the table, and the system may include a first cylinder operative to pivot the second lift arm, and a second cylinder operative to move the entire cradle upwardly and rearwardly so as to allow gravity discharge of the bale onto the table.

The first and second cylinders are preferably arranged in the same circuit so that the first and second cylinders operate consecutively i.e. the supply of pressure fluid to the circuit operates the first cylinder only, as the latter moves into engagement with the bale, but the increasing feedback resistance by the first cylinder then allows the second cylinder to be energised consecutively, so that after completion of the gripping of the bale (and adjustment of its position if necessary), the second cylinder then operates the cradle to lift the bale and then transfer it to the table.

The table may have a pair of laterally spaced rollers which engage the bale directly, or indirectly by an arrangement of slack belts.

The table may be a rotatable turntable, in which case one or more fixed film dispenser reels may be provided. Alternatively, the table may be fixed, in which case one or more rotatable arms may carry satellite film dispenser reel(s) which can orbit around the bale when loaded on the table.

Preferably, the bale wrapper apparatus is a mobile apparatus, having a wheel-supported frame. The mounting means may therefore comprise a drawbar which can connect the apparatus to the rear of a tractor, and preferably the drawbar is adjustable between an in-line transport position, and a laterally off-set position so that the tractor can run alongside a row of deposited bales. The drawbar may also be used to connect the apparatus to other propelling vehicles e.g. to a baler which is being propelled by a tractor.

However, it is withing the scope of the claimed invention to provide an embodiment of bale wrapper apparatus which can be mounted on the front of a propelling vehicle, in which case the mounting means of the apparatus will be designed to be capable of being mounted on a suitable front mounting arrangement of the vehicle.

Preferably, the co-operation between the frame of the apparatus and the vehicle will be such that the apparatus is laterally offset relative to the longitudinal axis of the vehicle, and which will then allow "in-line" operation of the apparatus, namely a) pick-up a bale lying on the ground (and laterally adjust if necessary via said movable guide surface), b) transfer to the wrapping table and c) rearwardly discharge the wrapped bale.

A preferred embodiment of bale wrapper apparatus according to the invention will now be described in detail, by way of example only, with reference to the accompanying drawings, in which:
Figure 1 is a schematic side view of a bale wrapper apparatus being towed by an agricultural tractor;
Figure 2 is a plan view corresponding to Figure 1;
Figure 3 is a perspective view from one side, showing the operating components of the bale wrapper apparatus in more detail;
Figure 4 is a plan view of the apparatus shown in Figure 3, and also showing the initial stages of engagement and gripping of a bale lying on the ground;
Figure 5 is a perspective view from one side, to an enlarged scale, also showing the engagement and gripping of a bale lying on the ground;
Figure 6 is a plan view showing the fully engaged and gripped position of the bale, ready for subsequent lifting and rearward transfer onto a bale wrapping table; and,
Figure 7 is a perspective view from one side, to an enlarged scale, also showing the fully engaged position of the bale ready for transfer to the table.

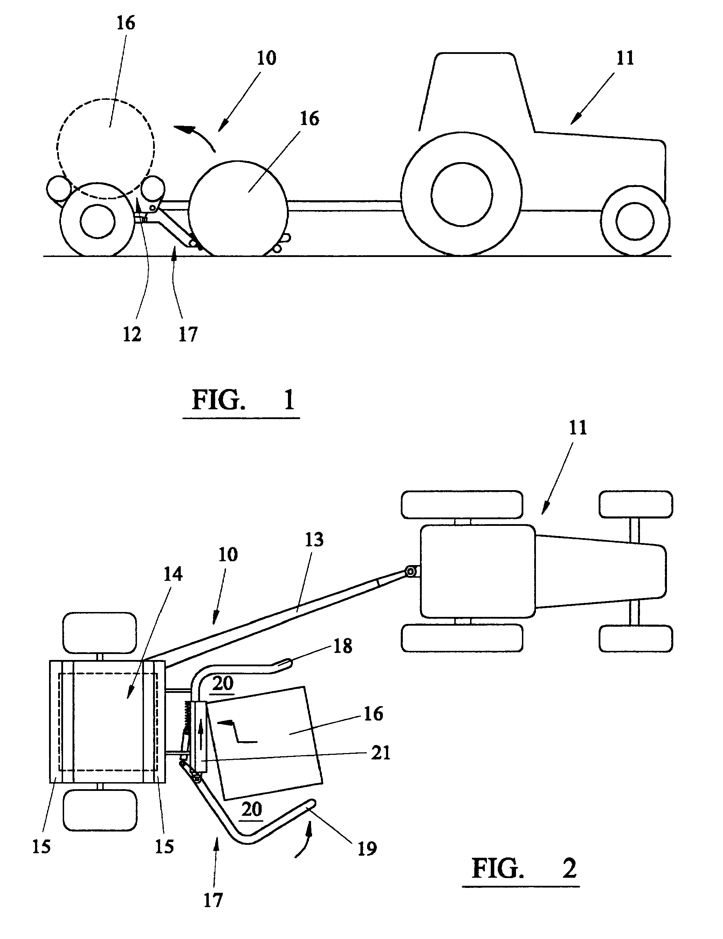

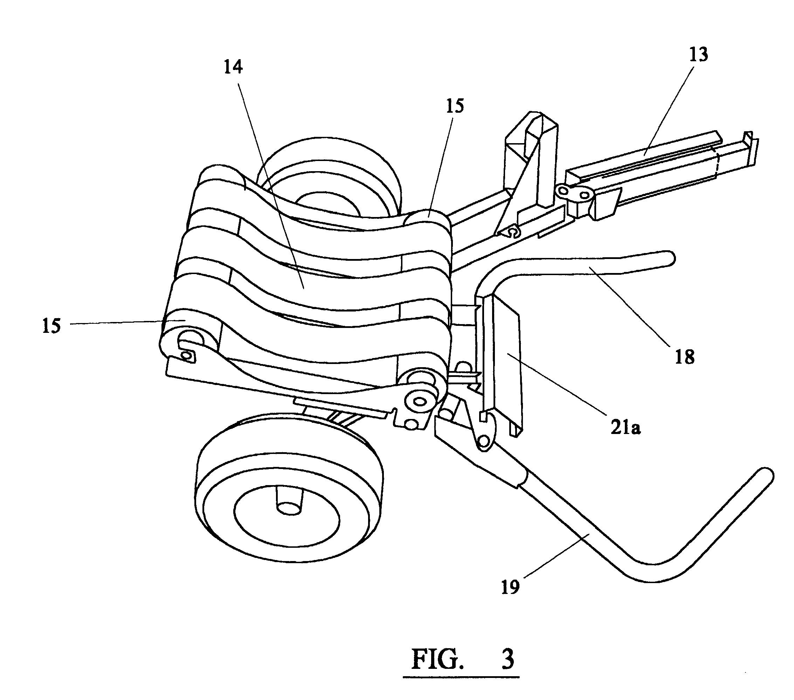

Referring first to Figures 1 and 2, these show schematically a bale wrapper apparatus designated generally by reference 10, and which is intended to be towed behind a propelling vehicle, which in the illustrated arrangement is an agricultural tractor 11. However, other types of propelling vehicle may be used, and including direct coupling of the apparatus 10 behind a baler.

The apparatus 10 has a wheel-supported frame or chassis, shown generally by reference 12, and a drawbar 13 projects forwardly of the frame 12 to permit the apparatus 10 to be towed behind the tractor 11. A wrapping table 14 is mounted on the frame 12, and comprises a pair of laterally spaced substantially parallel rollers 15, arranged to receive a bale 16 to be wrapped, either directly, or indirectly via an arrangement of slack belts.

The rollers 15 are operative to rotate the bale 16 about its axis, such axis being usually substantially horizontal, and also parallel to the axes of the rollers 15.

Holding means (not shown) is provided to hold one or more film dispenser reel, and means is provided to apply relative rotation between the holding means and the table about an upright axis substantially perpendicular to the axes of the rollers 15, so that film wrapping can be applied to the bale 16. This relative rotation means may be formed by a rotating turntable type of table 14, or an orbiting satellite dispenser reel, both of these types of bale wrapper apparatus being well known to those of ordinary skill in the art.

A bale-handling device 17 is mounted on the frame 12 forwardly of the table 14, and is operative to engage and to grip bale 16 lying on the ground, and to transfer the bale to the table, as shown in Figure 1.

The bale handling device 17 comprises first and second lift arms 18 and 19 respectively, which are spaced apart laterally from each other to define a receiving space 20 for the bale 16 lying on the ground. Figure 2 shows a typical situation in which the longitudinal axis of bale 16 is misaligned relative to the direction of advance of the bale handling device 17, and which can arise following rearward discharge of a cylindrical bale from a baler. It is one of the significant advantages of the embodiment of bale handler device to be described, that it is able to cause automatic adjustment of the position of the bale, during engagement and gripping by the lift arms 18 and 19, so as to provide repeated and reliable subsequent deposit of the bale at a controlled axial position relative to the rollers 15 of the table 14.

The first and second lift arms 18, 19 are relatively movable in order to engage opposed end regions of the bale 16, to grip the bale and then being operative to transfer the bale rearwardly to the wrapping table 14.

A guide surface 21 is provided on the bale handling device 17, and effectively defines part of the receiving space 20. The receiving space 20 therefore comprises a substantially U-shaped profile, formed by parts of the arms 18 and 19, and by the guide surface 21.

As can be seen in Figure 2, the guide surface 21 becomes engaged by the bale 16, as the latter becomes engaged by the lift arms 18 and 19, and the purpose of the guide surface 21 is to guide the movement of the bale 16 relative to the receiving space 20, when necessary, in order to locate the bale 16 in a predetermined position axially relative to the rollers 15 of the table 14.

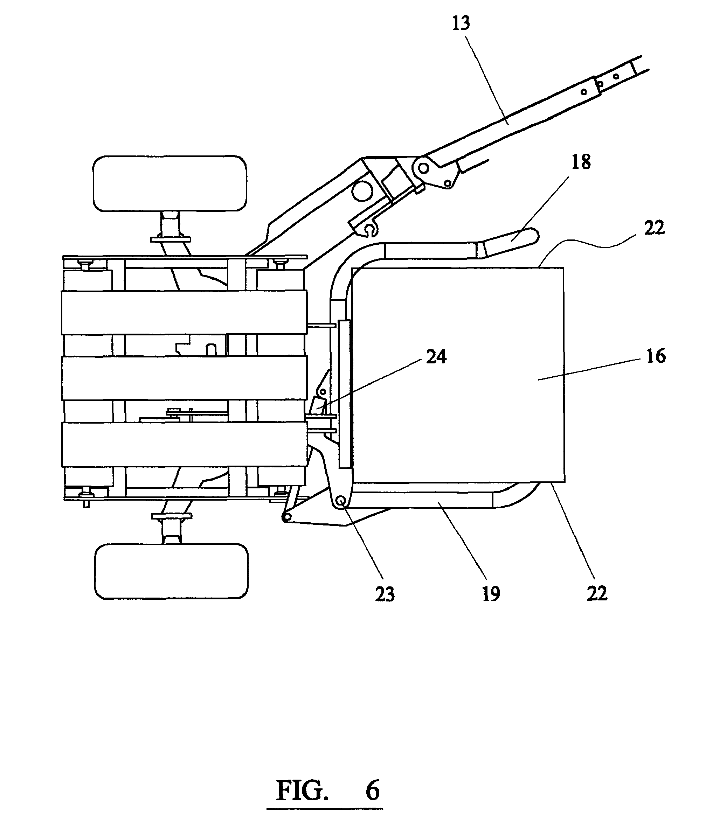

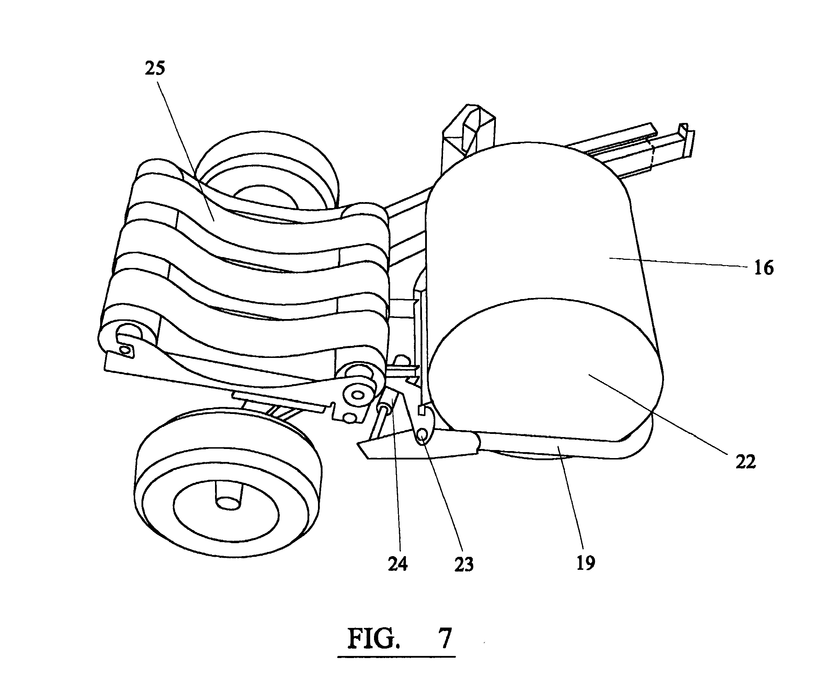

The bale 16 therefore is able to adjust its position so as to centralise itself relative to the receiving space 20, and to compensate for any initial misalignment. (The fully engaged and adjusted position of the bale can be seen in Figures 6 and 7, as will be described in more detail below).

Therefore, the first and second lift arms 18 and 19, and the guide surface 21, co-operate to engage a bale 16 lying on the ground (even if misaligned), and during the gripping of the bale by the lift arms, and the bale adjusts itself so as to take-up the desired position axially relative to the rollers of the table, prior to rearward transfer of the bale to the table.

The guide surface 21 can take a number of different forms, provided that it allows any necessary adjusting movement of the bale. In its simplest form (not shown), the guide surface may be a stationary surface which has slidable engagement with the bale. Other forms of guide surface may comprise a movable conveyor arrangement, such as an endless conveyor surface, or a serious of spaced conveyor rollers.

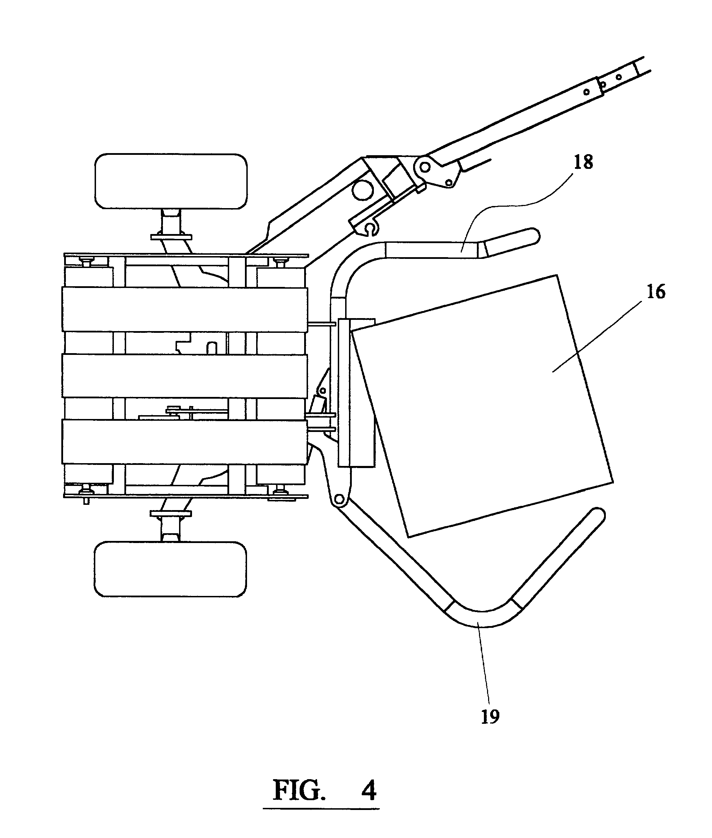

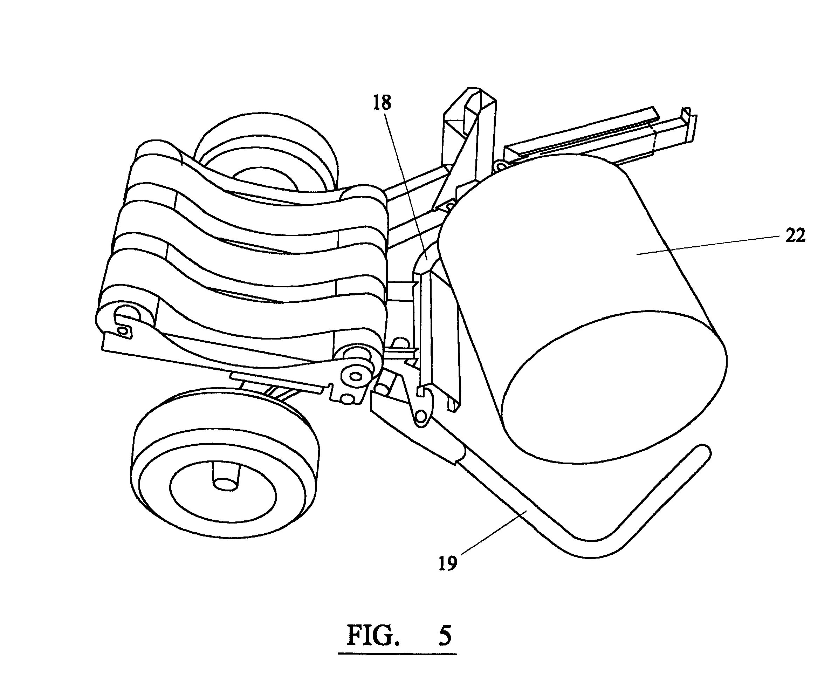

However, one particularly preferred conveyor arrangement, as shown in the drawings, comprises the provision of a linearly reciprocatable platform, shown in more detail in Figures 3 to 7, and designated by reference 21a. Description will therefore now be made of the detailed embodiment illustrated in Figures 3 to 7.

This shows in detail preferred arrangement of the lift arms 18 and 19, the table 14, the drawbar 13, and the movable guide surface 21a.

The movable guide surface 21a takes the form of a platform which is biassed, preferably by spring biassing, to an initial bale-engaging position, and it is movable against this biassing by the bale as the bale adjusts its position when necessary. Thereafter, upon transfer of the bale to the table 14, the platform returns to its initial position.

The apparatus 10 is particularly suitable for use in picking-up and wrapping cylindrical bales lying on the ground, though it could be applied also with rectangular cross section bales. The gripping engagement of the lift arms 18, 19 with the bale 16 is part engagement with opposed end faces 22 of the bale 16 (see Figure 6) and also part engagement with the underside of the bale 16 to assist in the subsequent lifting and rearward transfer.

The lift arms 18 and 19 are therefore shaped accordingly, so as to be able to perform these two different forms of engagement, and gripping with the bale 16. It can be seen therefore that the outboard end of second lift arm 19 curves downwardly and under the bale 16. The first lift arm 18 also can engage partly under the bale 16.

The first lift arm 18 is fixedly mounted on a generally U-shaped cradle type of device, whereas the second arm 19 is pivotally mounted on the cradle via a vertical pivot 23. The arms 18 and 19, together with the movable platform type of guide surface 21a, define a U-shaped receiving space, and with the platform 21a extending at least partly between the inboard ends of the lift arms 18, 19.

A fluid pressure operated system is provided, preferably a hydraulic circuit, to operate the bale handling device 17. The circuit comprises a first cylinder 24 which is operative to pivor the second lift arm 19, and a second cylinder is provided (not shown in detail) to move the entire cradle upwardly and rearwardly so as to allow gravity discharge of the bale 16 onto the table 14. The first and second cylinders are connected into a common hydraulic circuit so as to be operated consecutively i.e. the cylinder 24 operating the lift arm 19 operates initially, but as feedback resistance is met, during engagement with the bale, is caused progressive increased energisation of the second cylinder. The arrangement of the circuit is such that, after completion of engagement and gripping of the bale (after adjustment if necessary to its final position), the second cylinder then gradually becomes pressurised so as to start lifting movement of the bale. It may be desirable to arrange the circuit such that a small amount of lifting movement takes place while the lift arms 18 and 19 come into full engagement with the bale 16, since this initial lifting movement may facilitate sliding movement of at least the lift arm 19 with the underside of the bale.

The rollers 15 of the table 14 can engage the bale directly, or indirectly via an arrangement of slack belts 25, as can be seen in e.g. Figure 7.

The table 14 can be a rotatable turntable in a first type of bale wrapper apparatus. Alternatively, as is preferred, table 14 is fixedly mounted on the frame, and one or more rotating arms are provided which carry satellite film dispenser reel(s) which can orbit around the bale when loaded on the table, to allow wrapping to take place.

The drawbar 13 connects the apparatus to the rear of a tractor or other propelling vehicle, and preferably is adjustable between an in-line transport position, and a laterally off-set position so that the tractor can run alongside a row of deposited bales.

Although not shown, an alternative embodiment of bale wrapper apparatus may be provided, which is within the scope of the claimed invention, and which can be mounted on the front of a propelling vehicle. However, in this case, the mounting means (the drawbar 13 in the illustrated embodiments) will be replaced by an alternative mounting means which is capable of mounting the apparatus on a suitable front mounting arrangement of the vehicle.

Preferably, the co-operation between the frame of the apparatus and the vehicle will be such that the apparatus is laterally off-set relative to the longitudinal axis of the vehicle, and which will then allow in-line operation of the apparatus, namely a) pick-up a bale lying on the ground (and laterally adjust if necessary via said movable guide surface), b) transfer to the wrapping table and c) rearwardly discharge the wrapped bale.

## Claims

1. A bale wrapper apparatus (10) which comprises:
a frame (12);
mounting means (13) provided on the frame for coupling the apparatus with a propelling vehicle (11);
a wrapping table (14) mounted on the frame (12) and having rollers (15) which are operative to rotate the bale about its axis;
holding means for holding a film dispenser reel;
means for applying relative rotation between the holding means and the table (14)about an upright axis substantially perpendicular to the axes of the rollers (15) so that film wrapping can be applied to the bale (16); and,
a bale-handling device (17) mounted on the frame (12) forwardly of the table (14)and operative to engage and to grip a bale (16)lying on the ground, and to transfer the bale to the table (14),
first and second lift arms (18, 19) spaced apart laterally from each other to define a receiving space (20) for a bale (16) lying on the ground;
means (24) permitting relative movement between the first and second lift arms (18, 19) so that the latter can engage opposed end regions (22) of the bale (16) to grip the bale and then being operative to transfer the bale (16) rearwardly to the wrapping table (14); and,
**characterised in that** the bale-handling device (17) comprises:
a moveable guide surface (21, 21a), which defines part of said receiving space (20), the receiving space (20) therefore comprising a substantially U-shaped profile, formed by parts of the arms (18,19), and by the guide surface (21, 21a), said moveable guide surface (21, 21a) being, engageable by the bale (16)as the latter becomes engaged by the lift arms (18, 19), and being operative to guide adjustment movement of the bale (16) relative to the receiving space (20), when necessary, in order to locate the bale (16) in a predetermined position axially relative to the centre of the table (14).

2. Apparatus according to claim 1, in which the guide surface (21) comprises a moveable conveyor arrangement.

3. Apparatus according to claim 2, in which the moveable conveyor arrangement comprises an endless conveyor surface, or a series of spaced conveyor rollers.

4. Apparatus according to claim 2, in which the moveable conveyor arrangement comprises a linearly reciprocatable platform (21a).

5. Apparatus according to claim 4, in which the platform (21a) is biassed to an initial bale-engaging position.

6. Apparatus according to any one of the preceding claims, in which the bale-handling device (17) comprises a cradle on which said first lift arm (18) is fixedly mounted, and said second lift arm (19) is pivotally mounted.

7. Apparatus according to any one of the preceding claims, including a fluid pressure operated system to operate the bale handling device (17).

8. Apparatus according to claim 7, in which the system includes a first cylinder operative to pivot the second lift arm (19) and a second cylinder operative to move the entire cradle upward and rearwardly so as to allow gravity discharge of the bale (16) onto the table (14).

9. Apparatus according to claim 8, in which the first and second cylinders are arranged in the same circuit so as to operate consecutively.

10. Apparatus according to any one of the preceding claims, in which the table (14) comprises a rotatable turntable.

11. Apparatus according to any one of claims 1 to 9, in which the table (14) is fixed and one or more rotatable arms carry satellite film dispenser reels to orbit around the bale when the latter is loaded on the table (14).

12. Apparatus according to any one of the preceding claims, in which the apparatus is a mobile apparatus having a wheel-supported frame.

13. Apparatus according to claim 12, in which the mounting means comprising a drawbar (13) which can connect the apparatus to the rear of a propelling vehicle.

14. Apparatus according to claim 13, in which the drawbar 13 is adjustable between an in-line transport position, and a laterally offset position so that the propelling vehicle can run alongside a row of deposited bales.

15. Apparatus according to any one of claims 1 to 11, in which the mounting means is capable of coupling the apparatus to the front of a propelling vehicle, and preferably in a laterally offset position relative to the longitudinal axis of the vehicle.

16. Apparatus according to any one of claims 1 to 15, in which the table (14) comprises a pair of laterally spaced rollers (15) which extend parallel to each other and which are engageable directly with a bale 16 to rotate the latter, or indirectly via slack belts.

## Patentansprüche

1. Ballenwickelvorrichtung (10), welche umfasst:
einen Rahmen (12);
ein Montagemittel (13), welches auf dem Rahmen vorhanden ist, um die Vorrichtung mit einem antreibenden Fahrzeug (11) zu koppeln;
einen Wickeltisch (14), welcher auf dem Rahmen (12) angebracht ist und Walzen (15) aufweist, welche funktionsfähig sind um den Ballen um seine Achse zu drehen; ein Haltemittel, um eine Folienabgaberolle zu halten;
ein Mittel, um eine relative Drehung zwischen dem Haltemittel und dem Tisch (14) um eine im Wesentlichen senkrecht zu den Achsen der Walzen (15) befindliche senkrechte Achse aufzubringen, so dass der Ballen (16) mit einer Folie eingewickelt werden kann; und
eine Ballenbearbeitungsvorrichtung (17), welche vor dem Tisch (14) auf dem Rahmen (12) angebracht und funktionsfähig ist, um in Eingriff mit einem auf dem Boden liegenden Ballen (16) zu kommen und diesen zu greifen und den Ballen zu dem Tisch (14) zu befördern,
einen ersten und zweiten Hebearm (18, 19), welche seitlich voneinander beabstandet sind, um einen Aufnahmeraum (20) für einen auf dem Boden liegenden Ballen (16) zu definieren;
ein Mittel (24), um eine relative Bewegung zwischen den ersten und zweiten Hebearmen (18, 19) zu ermöglichen, so dass sich die letztgenannten mit gegenüberliegenden Endbereichen (22) des Ballens (16) in Eingriff bringen können, um den Ballen zu greifen und dann funktionsfähig sind, um den Ballen (16) nach hinten zu dem Wickeltisch (14) zu befördern; und,
**dadurch gekennzeichnet, dass** die Ballenbearbeitungsvorrichtung (17) umfasst:
eine bewegbare Führungsoberfläche (21, 21a), welche einen Teil des Aufnahmeraumes (20) definiert, wobei der Aufnahmeraum (20) deshalb ein im Wesentlichen U-förmiges Profil umfasst, welches durch Teile der Arme (18, 19) und
durch die Führungsoberfläche (21, 21a) ausgebildet ist, wobei die bewegbare Führungsoberfläche (21, 21a) mit dem Ballen (16) in Eingriff bringbar ist, da der letztgenannte durch die Hebearme (18, 19) in Eingriff gebracht wird, und welche funktionsfähig ist, um, wenn es notwendig ist, eine Einstellbewegung des Ballens (16) relativ zu dem Aufnahmeraum (20) zu leiten, um den Ballen (16) in einer vorbestimmten Position axial relativ zu der Mitte des Tisches (14) anzuordnen.

2. Vorrichtung nach Anspruch 1, wobei die Führungsoberfläche (21) eine bewegbare Förderanordnung umfasst.

3. Vorrichtung nach Anspruch 2, wobei die bewegbare Förderanordnung eine endlose Förderoberfläche oder eine Reihe von beabstandeten Förderwalzen umfasst.

4. Vorrichtung nach Anspruch 2, wobei die bewegbare Förderanordnung eine lineare Plattform (21a) umfasst, welche sich hin und her bewegen kann.

5. Vorrichtung nach Anspruch 4, wobei die Plattform (21a) zu einer anfänglichen mit einem Ballen in Eingriff bringenden Position hin vorspannt ist.

6. Vorrichtung nach einem der vorhergehenden Ansprüche, wobei die Ballenbearbeitungsvorrichtung (17) eine Gabel umfasst, auf welcher der erste Hebearm (18) fest und der zweite Hebearm (19) schwenkbar angebracht ist.

7. Vorrichtung nach einem der vorhergehenden Ansprüche, welche ein mit einem Flüssigkeitsdruck arbeitendes System aufweist, um die Ballenverarbeitungsvorrichtung (17) zu betreiben.

8. Vorrichtung nach Anspruch 7, wobei das System einen ersten Zylinder, welcher funktionsfähig ist, um den zweiten Hebearm (19) zu schwenken, und einen zweiten Zylinder aufweist, welcher funktionsfähig ist, um die gesamte Gabel nach oben und zurück zu bewegen, um so eine Entladung des Ballens (16) auf dem Tisch (14) durch die Schwerkraft zu ermöglichen.

9. Vorrichtung nach Anspruch 8, wobei der erste und der zweite Zylinder in derselben Schaltung angeordnet sind, um fortlaufend zu arbeiten.

10. Vorrichtung nach einem der vorhergehenden Ansprüche, wobei der Tisch (14) einen drehbaren Drehtisch umfasst.

11. Vorrichtung nach einem der Ansprüche 1 bis 9, wobei der Tisch (14) befestigt ist und ein oder mehrere drehbare Arme Anhängselfolienabgaberollen tragen, um um den Ballen herum zu kreisen, wenn der letztgenannte auf den Tisch (14) geladen wird.

12. Vorrichtung nach einem der vorhergehenden Ansprüche, wobei die Vorrichtung eine mobile Vorrichtung mit einem Rad gelagerten Rahmen ist.

13. Vorrichtung nach Anspruch 12, wobei das Montagemittel eine Deichsel (13) umfasst, welche die Vorrichtung mit der Rückseite eines antreibenden Fahrzeugs verbinden kann.

14. Vorrichtung nach Anspruch 13, wobei die Deichsel (13) zwischen einer Transportposition in Reihe und einer seitlich versetzten Position einstellbar ist, so dass das antreibende Fahrzeug seitlich entlang einer Reihe von abgelegten Ballen fahren kann.

15. Vorrichtung nach einem der Ansprüche 1 bis 11, wobei das Montagemittel geeignet ist, um die Vorrichtung an die Vorderseite eines antreibenden Fahrzeugs und vorzugsweise in einer seitlich versetzten Position relativ zu der Längsachse des Fahrzeugs zu koppeln.

16. Vorrichtung nach einem der Ansprüche 1 bis 15, wobei der Tisch (14) ein Paar von seitlich beabstandeten Walzen (15) umfasst, welche sich parallel zueinander erstrecken und welche direkt oder indirekt über Riemen mit einem Ballen (16) in Eingriff bringbar sind, um den letztgenannten zu drehen.

## Revendications

1. Appareil (10) pour envelopper des balles comprenant :
un châssis (12) ;
des moyens de montage (13) présents sur le châssis pour coupler l'appareil à un véhicule moteur (11) ;
une table d'envelloppement (14) montée sur le châssis (12) et possédant des rouleaux (15) qui servent à faire tourner la balle autour de son axe ;
des moyens de maintien pour maintenir un dévidoir de pellicule ;
des moyens destinés à imprimer une rotation relative entre les moyens de maintien et la table (14), autour d'un axe vertical sensiblement perpendiculaire aux axes des rouleaux (15) afin que la balle (16) puisse être enveloppée de pellicule ;
et,
un dispositif (17) de manutention des balles monté sur le châssis (12) à l'avant de la table (14) et servant à venir en contact et saisir une balle (16) reposant sur le sol, et à transférer la balle sur la table (14),
des premier et deuxième bras de levage (18, 19) espacés latéralement l'un de l'autre pour définir un espace de réception (20) pour une balle (16) reposant sur le sol ;
des moyens (24) permettant un mouvement relatif entre le premier et le deuxième bras de levage (18, 19) afin que ce dernier puisse venir en contact avec des zones terminales (22) opposées de la balle (16) pour saisir la balle, puis destinés à transférer la balle (16) en direction de l'arrière, vers la table d'enveloppement (14) ;
**caractérisé en ce que** le dispositif (17) de manutention des balles comprend :
une surface de guidage mobile (21, 21a) qui définit une partie de l'espace de réception (20), l'espace de réception (20) comprenant par conséquent un profilé sensiblement en forme de U, formé par des parties des bras (18, 19) et par la surface de guidage (21, 21a), cette surface de guidage mobile (21, 21a) pouvant se trouver en contact avec la balle (16) lorsque cette dernière est saisie par les bras de levage (18, 19) et servant à guider le mouvement d'ajustement de la balle (16) par rapport à l'espace de réception (20), lorsque cela est nécessaire, afin de placer la balle (16) dans une position prédéterminée axialement par rapport au centre de la table (14).

2. Appareil selon la revendication 1, dans lequel la surface de guidage (21) comprend un agencement formant convoyeur mobile.

3. Appareil selon la revendication 2, dans lequel l'agencement formant convoyeur mobile comprend une surface de transport sans fin, ou une série de rouleaux de transport espacés.

4. Appareil selon la revendication 2, dans lequel l'agencement formant convoyeur mobile comprend une plate-forme (21a) pouvant effectuer un mouvement linéaire de va-et-vient.

5. Appareil selon la revendication 4, dans lequel la plate-forme (21a) est poussée dans une position initiale où elle se trouve en contact avec la balle.

6. Appareil selon l'une quelconque des revendications précédentes, dans lequel le dispositif (17) de manutention des balles comprend une traverse sur laquelle le premier bras de levage (18) est monté fixement et le deuxième bras de levage (19) est monté pivotant.

7. Appareil selon l'une quelconque des revendications précédentes, comprenant un système hydraulique pour faire fonctionner le dispositif (17) de manutention des balles.

8. Appareil selon la revendication 7, dans lequel le système comprend un premier cylindre servant à faire pivoter le deuxième bras de levage (19) et un deuxième cylindre servant à déplacer la traverse, dans sa totalité, vers le haut et vers l'arrière, afin de permettre un déchargement par gravité de la balle (16) sur la table (14).

9. Appareil selon la revendication 8, dans lequel le premier et le deuxième cylindres sont montés dans le même circuit afin de fonctionner consécutivement.

10. Appareil selon l'une quelconque des revendications précédentes, dans lequel la table (14) comprend une plaque tournante.

11. Appareil selon l'une quelconque des revendications 1 à 9, dans lequel la table (14) est fixe, et un ou plusieurs bras rotatifs portent des dévidoirs de pellicule satellites pour qu'ils décrivent une orbite autour de la balle lorsque celle-ci est chargée sur la table (14).

12. Appareil selon l'une quelconque des revendications précédentes, dans lequel l'appareil est un appareil mobile possédant un châssis sur roues.

13. Appareil selon la revendication 12, dans lequel les moyens de montage comprennent une barre d'attelage (13) qui peut relier l'appareil à l'arrière d'un véhicule moteur.

14. Appareil selon la revendication 13, dans lequel la barre d'attelage (13) peut être placée dans une position de transport en ligne, ou dans une position latéralement décalée afin que le véhicule moteur puisse se déplacer le long d'une rangée de balles déposées à terre.

15. Appareil selon l'une quelconque des revendications 1 à 11, dans lequel les moyens de montage sont susceptibles de coupler l'appareil à l'avant d'un véhicule moteur et, de préférence, dans une position latéralement décalée par rapport à l'axe longitudinal du véhicule.

16. Appareil selon l'une quelconque des revendications 1 à 15, dans lequel la table (14) comprend une paire de rouleaux (15) latéralement espacés qui s'étendent parallèlement l'un à l'autre et qui peuvent venir directement en contact avec une balle (16) pour faire tourner cette dernière, ou indirectement par l'intermédiaire de courroies lâches.
